(19) Europäisches Patentamt / European Patent Office / Office européen des brevets

(11) **EP 4 607 150 A1**

(12) **EUROPEAN PATENT APPLICATION**
published in accordance with Art. 153(4) EPC

(43) Date of publication:
**27.08.2025 Bulletin 2025/35**

(21) Application number: **23890875.0**

(22) Date of filing: **16.11.2023**

(51) International Patent Classification (IPC):
***G01C 21/20*** (2006.01)   ***G01C 21/16*** (2006.01)

(52) Cooperative Patent Classification (CPC):
**G01C 21/00; G01C 21/16; G01C 21/20**

(86) International application number:
**PCT/CN2023/132153**

(87) International publication number:
**WO 2024/104446 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 CN 202211447184**

(71) Applicant: Beijing Unicorn Technology Co., Ltd.
**Beijing 100098 (CN)**

(72) Inventors:
• **HUANG, Can**
  **Beijing 100098 (CN)**
• **WU, Kejian**
  **Beijing 100098 (CN)**

(74) Representative: **Grünecker Patent- und Rechtsanwälte**
**PartG mbB**
**Leopoldstraße 4**
**80802 München (DE)**

(54) **DEVICE ATTITUDE ESTIMATION METHOD AND APPARATUS**

(57) The present application discloses a method for estimating an attitude of a device (200). A specific implementation solution is as follows: collecting measurement values from a gyroscope sensor and a magnetometer to obtain detection information at a current time (210); acquiring the detection information at the current time, and performing an attitude information correction step: acquiring a system state vector and a system state covariance of the device (220); propagating the system state vector based on an angular velocity information at the current time to obtain a prior estimated system state vector (223); propagating the system state covariance based on the angular velocity information at the current time to obtain a prior estimated system state covariance (225); updating the prior estimated system state vector and the prior estimated system state covariance based on magnetic field strength information at the current time to obtain a posterior system state vector and a posterior system state covariance (227); and acquiring, from the posterior system state vector, updated attitude information as attitude information of the device at the current time (229); and in response to determining that the device is in an operating state, cyclically performing the attitude information calibration step (230).

FIG. 2

## Description

The present disclosure claims priority to Chinese Patent Application No. CN 202211447184.7, filed with the China National Intellectual Property Administration on November 18, 2022, and entitled "Method and Apparatus for Estimating Attitude of Device", which is incorporated herein by reference in its entirety.

## TECHNICAL FIELD

The present application relates to the field of computer technologies, and in particular to a method and apparatus for estimating an attitude of a device.

## BACKGROUND

A pose may be used to describe a position and an attitude of an electronic device such as a head-mounted display device, a robot, or the like in a specified coordinate system. In the related art, the poses of various electronic devices may be tracked by computer vision technology during use. Moreover, the accuracy of pose tracking may affect a user's interactive immersion in using the head-mounted display device as well as the accuracy of navigation of the robot, and the like. Therefore, improving the accuracy of a detected device pose during use of such an electronic device has become a pressing technical problem to be solved.

## SUMMARY

Embodiments of the present disclosure provide a method and apparatus for estimating an attitude of a device.
In a first aspect, an embodiment of the present disclosure provides a method for estimating an attitude of a device, the device including a gyroscope sensor and a magnetometer, the method including: collecting measurement values from the gyroscope sensor and the magnetometer to obtain detection information at a current time, wherein the detection information includes angular velocity information, and magnetic field strength information; acquiring the detection information at the current time, and performing an attitude information correction step which includes: acquiring a system state vector and a system state covariance of the device, wherein the system state vector includes attitude information of the device, a gyroscope bias, and a magnetometer intrinsic parameter bias; propagating the system state vector based on the angular velocity information at the current time to obtain a prior estimated system state vector; propagating the system state covariance based on the angular velocity information at the current time to obtain a prior estimated system state covariance; updating the prior estimated system state vector and the prior estimated system state covariance based on the magnetic field strength information at the current time to obtain a posterior system state vector and a posterior system state covariance; and acquiring, from the posterior system state vector, updated attitude information as attitude information of the device at the current time; and in response to determining that the device is in an operating state, acquiring detection information at the next time as the detection information at the current time, determining the posterior system state vector and the posterior system state covariance as the system state vector and the system state covariance, and performing the attitude information calibration step.
In a second aspect, an embodiment of the present disclosure provides an apparatus for estimating an attitude of a device, the device including a gyroscope sensor and a magnetometer, the apparatus including: an collecting unit configured to collect measurement values from the gyroscope sensor and the magnetometer to obtain detection information at a current time, wherein the detection information includes angular velocity information, and magnetic field strength information; an acquiring unit configured to acquire the detection information at the current time, and perform an attitude information correction step: acquiring a system state vector and a system state covariance of the device, wherein the system state vector includes attitude information of the device, a gyroscope bias, and a magnetometer intrinsic parameter bias; propagating the system state vector based on the angular velocity information at the current time to obtain a prior estimated system state vector; propagating the system state covariance based on the angular velocity information at the current time to obtain a prior estimated system state covariance; updating the prior estimated system state vector and the prior estimated system state covariance based on the magnetic field strength information at the current time to obtain a posterior system state vector and a posterior system state covariance; and acquiring, from the posterior system state vector, updated attitude information as attitude information of the device at the current time; and a determining unit configured to, in response to determining that the device is in an operating state, acquire detection information at the next time as the detection information at the current time, determine the posterior system state vector and the posterior system state covariance as the system state vector and the system state covariance, and perform the attitude information calibration step.
In a third aspect, an embodiment of the present disclosure provides an electronic device including: one or more processors; and a storage means configured to store one or more programs, wherein the one or more programs, when executed by the one or more processors, cause the one or more processors to implement the method for estimating an attitude of a device described above.

In a fourth aspect, an embodiment of the present disclosure provides a non-transitory computer readable storage medium configured to store computer instructions, wherein the computer instructions are configured to cause a computer to execute the method for estimating an attitude of a device described above.

In a fifth aspect, an embodiment of the present disclosure provides a computer program product including computer programs/instructions, wherein the computer programs/instructions, when executed by a processor, implement the method for estimating an attitude of a device described above.

## BRIEF DESCRIPTION OF THE DRAWINGS

Other features, objectives and advantages of the present disclosure will become more apparent by reading the detailed description of the non-restrictive embodiments with reference to the following drawings.

Fig. 1 is an exemplary system architecture to which embodiments of a method for estimating an attitude of a device or an apparatus for estimating an attitude of a device in the present application is applied.

Fig. 2 is a flow of an embodiment of a method for estimating an attitude of a device according to the present application.

Fig. 3 is a flow of another embodiment of a method for estimating an attitude of a device according to the present application.

Fig. 4 is a flow of yet another embodiment of a method for estimating an attitude of a device according to the present application.

Fig. 5 is a block diagram of an embodiment of an apparatus for estimating an attitude of a device according to the present application.

Fig. 6 is a schematic structural diagram of a computer system of an electronic device suitable for implementing the embodiments of the present application.

## DETAILED DESCRIPTION

To make the objects, technical solutions and advantages of the present application clearer, the technical solutions of the present application will be described clearly and completely below in conjunction with the specific embodiments of the present application and the corresponding drawings. It can be understood that specific embodiments described herein are only used for explaining the related invention, rather than limiting the present invention. In addition, it is also to be noted that, for convenience of description, only parts related to the present invention are shown in the drawings.

It is to be noted that embodiments in the present disclosure and features in the embodiments can be combined with each other without conflicts. The present disclosure will be described in detail below with reference to the accompanying drawings in conjunction with embodiments.

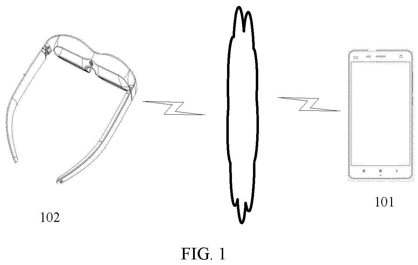

Fig. 1 shows an exemplary system architecture 100 to which embodiments of a method for estimating an attitude of a device or an apparatus for estimating an attitude of a device in the present application can be applied.

As shown in Fig. 1, the system architecture 100 may include a terminal 101 and a device 102 to be detected. The terminal 101 and the device 102 to be detected may be connected via a network. The network connection may include various types of connections, such as a wired or wireless communication link, a fiber optic cable, or the like. The terminal 101 and the device 102 to be detected may interact via the network to send or receive data information, etc.

A user may use the terminal 101 to interact with the device 102 to be detected via the network to receive or send data messages, etc. The terminal 101 may have a display screen, a central processing unit (CPU), a memory, an I/O interface, etc., and may process the received data information. The above-mentioned device 102 to be detected may be any of various electronic devices having a gyroscope sensor, a magnetometer, etc., whose pose information is to be detected. For example, the device 102 to be detected may be an AR, VR, or other head-mounted display device. Alternatively, the device 102 to be detected may be a robot or other electronic device.

The terminal 101 may be any of various electronic devices with a computing unit, including, but not limited to, a smartphone, an in-vehicle system, a tablet computer, an e-book reader, a laptop computer, a desktop computer, etc.

The above-mentioned terminal 101 may also provide various services. For example, the terminal described above may process data collected by the gyroscope sensor and the magnetometer in the device 102 to be detected to obtain accurate attitude information of the device 102 to be detected through an extended Kalman filter.

It is to be noted that the method for estimating an attitude of a device provided in embodiments of the present application is generally performed by the terminal 101, and accordingly, the apparatus for estimating an attitude of a device is generally provided in the terminal 101.

It should be understood that the numbers of the terminal 101 and the device 102 to be detected in Fig. 1 are merely illustrative. There may be any number of the terminal 101 and the device 102 to be detected, as needed for implementation. For example, two terminals 101 may be included in Fig. 1, wherein one terminal 101 may perform processing such as analysis on acquired data of the gyroscope sensor and the magnetometer to obtain an attitude of the device 102 to be detected, and the other terminal 101 may send the attitude to the device 102 to be detected, so that the attitude may be used for display or the like.

It should also be noted that although the solution disclosed in the present application may be applied to the terminal 101, it is not excluded that the solution may also be applied to the device 102 to be detected. In the case where the solution disclosed in the present application is applied to the device 102 to be detected, the above-mentioned device 102 to be detected may have a computing unit, and therefore, the device 102 to be detected may perform an attitude information calibration step after collecting measurement values from the gyroscope sensor and the magnetometer, so that calibrated pose information may be obtained. **In** this case, the method for estimating an attitude of a device may be performed by the device 102 to be detected, and accordingly, the apparatus for estimating an attitude of a device may also be provided in the device 102 to be detected.

**In** the related art, the pose information of the device to be detected may be determined by methods such as integrating an angular velocity collected by the gyroscope.

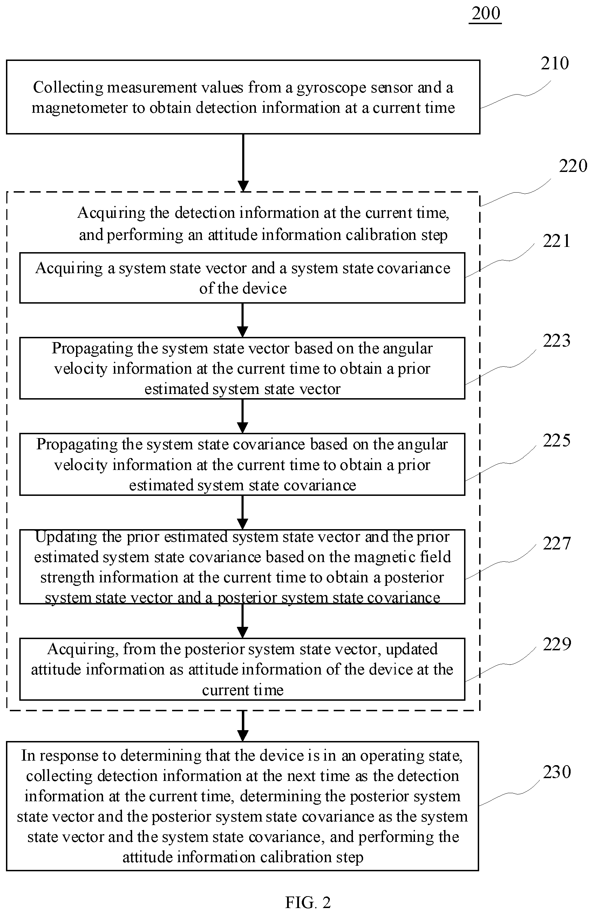

Referring further to Fig. 2, a flow 200 of an embodiment of a method for estimating an attitude of a device according to the present application is shown. The method for estimating an attitude of a device includes the following steps:

Step 210: collecting measurement values from a gyroscope sensor and a magnetometer to obtain detection information at a current time.

In this embodiment, the device whose attitude is to be detected may include at least a gyroscope sensor and a magnetometer. Therefore, during operation of the device, the above-mentioned gyroscope sensor may measure an angular velocity of the device in real time, and the magnetometer may measure magnetic field strength of the device in real time.

An executor (e.g., the terminal shown in Fig. 1) of the method for estimating an attitude of a device may collect the measurement values from the gyroscope sensor and the magnetometer sensor, so that the detection information of the device at the current time may be obtained. The detection information may include angular velocity information and magnetic field strength information. It may be understood that when the device is operating, the above-mentioned executor may directly execute the method for detecting an attitude of a device disclosed in the present application, without the need to perform a preset operation on the device to pre-calibrate the magnetometer in order to improve the accuracy of a detected attitude of the device.

Step 220: acquiring the detection information at the current time, and performing an attitude information calibration step. The pose information calibration may be implemented by steps 221 to 229. The specific process is as follows:

Step 221: acquiring a system state vector and a system state covariance of the device.

In this embodiment, after acquiring the angular velocity information at the current time and the magnetic field strength information at the current time, the above-mentioned executor may acquire the system state vector and the system state vector covariance in various ways. When the pose information calibration step is performed, the system state vector and the system state vector covariance acquired by the above-mentioned executor are the latest system state vector and system state covariance existing in the system up to the current time. As an example, the above-mentioned executor may determine a posterior system state vector and a posterior system state covariance obtained from the last execution of the attitude information calibration step as the system state vector and the system state vector covariance that need to be acquired for the present execution of the attitude information calibration step. The system state vector may include at least attitude information of the device, a gyroscope bias, and a magnetometer intrinsic parameter bias. Therefore, if the system state vector acquired by the above-mentioned executor is a posterior system state vector obtained from the last execution of the attitude information calibration step, in which case the system state vector acquired by the above-mentioned executor may include the posterior system state vector obtained from the last execution of the attitude information calibration step, the system state vector may include updated attitude information, gyroscope bias, and magnetometer intrinsic parameter bias. Using the current time being k+1 as an example, the system state vector and the system state covariance acquired by the above-mentioned executor may be a posterior system state vector $x_k = [^{lk}q_G, bg, bm]$ and a posterior system state covariance Pk obtained from the execution of the attitude information calibration step at the previous time k.

In some optional implementations, the system state vector and the system state vector covariance acquired by the above-mentioned executor in the present execution of the attitude information calibration step may also be a pre-constructed initialized system state vector $x = [^{l}q_G, bg, bm]$ and a pre-constructed system state vector covariance P0. In this case, the above-mentioned executor may use the pre-constructed initialized system state vector and the pre-constructed system state vector covariance respectively as the system state vector and the system state covariance acquired in the above-mentioned executor needs in order to execute the attitude information calibration step, so as to facilitate the present execution of the attitude information calibration step. It may be understood that if the system state vector acquired by the above-mentioned executor is an initialized system state vector, the system state vector may include attitude information, a gyroscope bias, and a magnetometer intrinsic parameter bias in an initial state.

Step 223: propagating the system state vector based on the angular velocity information at the current time to obtain a prior estimated system state vector.

In this embodiment, based on the acquired angular velocity information at the current time, and the system state vector acquired at step 221, the above-mentioned executor may obtain the prior estimated system state vector in various ways.

In some optional implementations of this embodiment, the above-mentioned executor may obtain the prior estimated system state vector through the following steps: determining an amount of rotational change of the device based on the angular velocity information at the current time and angular velocity information at the previous time, wherein the amount of rotational change represents a degree of rotational change at the current time relative to the previous time; acquiring attitude information of the device at the previous time; performing rotation-based computation on the acquired attitude information at the previous time based on the determined amount of rotational change, and predicting attitude information of the device at the current time to obtain the prior estimated system state vector.

In this implementation, the above-mentioned executor may obtain an average angular velocity between the angular velocity at the previous time and the angular velocity at the current time, and calculate the amount of rotational change of the gyroscope based on the average angular velocity. To further improve the accuracy of the calculated amount of rotational change, the above-mentioned executor may correct the angular velocity at the current time and the angular velocity at the previous time by using the gyroscope bias in the acquired system state vector, and then obtain an average angular velocity between the corrected angular velocity at the previous time and the corrected angular velocity at the current time.

The amount of rotational change of the device at the current time k+1 relative to the previous time k may be calculated by the following formula:

$$^{Ik+1}q_{Ik} = \cos(\frac{|\bar{\omega}|}{2}\Delta t)\cdot I_{4\times4} + \frac{1}{|\bar{\omega}|}\sin(\frac{|\bar{\omega}|}{2}\Delta t)\cdot\Omega(\bar{\omega}) + \frac{1}{48}(\Omega(\omega_{k+1})\Omega(\omega_k) - \Omega(\omega_k)\Omega(\omega_{k+1}))\Delta t^2$$

wherein $^{I_{k+1}}q_{I_k}$ is the amount of rotational change of the device at the current time k+1 relative to the previous time k, $\omega_k$ is used to represent the corrected angular velocity at the time k, $\omega_{k+1}$ is used to represent the corrected angular velocity at the time k+1, $\bar{\omega}$ is used to represent an average value of the corrected angular velocity at the time k+1, and $\Delta t$ is used to represent a time interval between the time k and the time k+1.

$$\Omega(\omega)=\begin{bmatrix} 0 & \omega_z & -\omega_y & \omega_x \\ -\omega_z & 0 & \omega_x & \omega_y \\ \omega_y & -\omega_x & 0 & \omega_z \\ -\omega_x & -\omega_y & -\omega_z & 0 \end{bmatrix}$$

$$=\begin{bmatrix} -\lfloor \omega\times \rfloor & \omega \\ -\omega^T & 0 \end{bmatrix},$$

wherein $\omega_x$, $\omega_y$, and $\omega_z$ respectively represent components of the angular velocity $\omega$ in x, y, and z axes in a preset coordinate system.

$\omega_k = \omega_{m,k} - b_g$, wherein $\omega_{m,k}$ is used to represent the angular velocity acquired at the time k, and $b_g$ is used to represent the gyroscope bias in the acquired state vector.

$\omega_{k+1} = \omega_{m,k+1} - b_g$, wherein $\omega_{m,k+1}$ is used to represent the angular velocity acquired at the time k+1.

The above-mentioned $\bar{\omega}$ may be calculated by the formula $\bar{\omega} = \frac{\omega_k + \omega_{k+1}}{2}$.

After $^{I_{k+1}}q_{I_k}$ is determined, the prior estimated system state vector may be calculated by the following formula: $^{I_{k+1}}q_G = {}^{I_{k+1}}q_{I_k} * {}^{I_k}q_G$ , wherein $^{I_{k+1}}q_G$ is used to represent an attitude of the device at the current time k+1, and $^{I_k}q_G$ is used to represent an attitude of the device at the previous time k.

It is also to be noted that new detection information is not generated by the gyroscope sensor, etc. during the propagation process (i.e., during the process from the time k to the time k+1) of the system state vector and the system state covariance, and therefore, $b_g$, $b_m$ and $G_m$ are not corrected and updated during the propagation process. In summary, the prior estimated system state vector calculated by this implementation is

$$x_{k+1|k} = \begin{bmatrix} {}^{I_{k+1}}q_G, & b_g, & b_m, & {}^{G}m \end{bmatrix}.$$

It may be understood that the above-mentioned executor may obtain the prior estimated system state vector in other ways. For example, the above-mentioned executor may directly determine the corrected angular velocity at the current time as an average angular velocity at the current time, and thereby determine the amount of rotational change of the device; and then acquire corrected attitude information at the previous time, and predict the prior estimated system state vector of the device at the current time based on the determined amount of rotational change. Alternatively, the above-mentioned executor may calculate the amount of rotational change of the device directly based on the angular velocity acquired at the current time and the angular velocity acquired at the previous time, and thereby calculate the prior estimated state vector of the device. Here, there is no unique limitation on the manner of obtaining the prior estimated system state vector.

Step 225: propagating the system state covariance based on the angular velocity information at the current time to obtain a prior estimated system state covariance.

In this embodiment, based on the acquired angular velocity information at the current time, and the system state covariance acquired at step 221, the above-mentioned executor may obtain the prior estimated system state covariance in various ways.

In some optional implementations of this embodiment, the above-mentioned executor may obtain the prior estimated system state covariance in the following manner: calculating estimated sequences of a pre-constructed state transition matrix and a pre-constructed noise covariance matrix based on the angular velocity information at the current time; and obtaining the prior estimated system state covariance based on a posterior system state covariance at the previous time, and the determined state transition matrix and noise covariance matrix. In this implementation, the pre-constructed state transition matrix is related to the attitude information of the device, the gyroscope bias, and the magnetometer intrinsic parameter bias, and similarly, the pre-constructed noise covariance matrix is related to the attitude information of the device, the gyroscope bias, and the magnetometer intrinsic parameter bias. Then, a sequence of the pre-constructed state transition matrix and a sequence of the pre-constructed noise covariance matrix are calculated based on the angular velocity information at the current time, specifically as follows:

$$\Phi = \begin{bmatrix} \Theta & \Psi & 0_{3\times3} \\ 0_{3\times3} & I_{3\times3} & 0_{3\times3} \\ 0_{3\times3} & 0_{3\times3} & I_{3\times3} \end{bmatrix},$$

wherein $\Phi$ is a discrete-time state transition matrix, $\Theta$ is used to represent a state transition matrix between an attitude at the previous time and the next time, and $\Psi$ is used to represent a state transition matrix between a gyroscope bias at the previous time and the attitude at the next time.

$$Q_d = \begin{bmatrix} Q_{11} & Q_{12} & 0_{3\times3} \\ Q_{12}{}^T & Q_{22} & 0_{3\times3} \\ 0_{3\times3} & 0_{3\times3} & \sigma_{bm}I_{3\times3} \end{bmatrix},$$

wherein $Q_d$ is a discrete-time system noise covariance, $Q_{11}$ is used to represent a discrete-time noise covariance of the attitude, $Q_{12}$ is used to represent a discrete-time cross-correlation noise covariance between the attitude and the gyroscope bias, $Q_{22}$ is used to represent a discrete-time noise covariance of the gyroscope bias, and $\sigma_{bm}$ is used to represent a coefficient of magnetometer intrinsic parameter stability.

Based on the system state covariance Pk|k at the previous time acquired at step 221, the above-mentioned executor may calculate the prior estimated system state covariance Pk|k+1 by the following formula: $P_{k+1|k} = \phi P_{k|k} \phi^T + Q_d$.

Step 227: updating the prior estimated system state vector and the prior estimated system state covariance based on the magnetic field strength information at the current time to obtain a posterior system state vector and a posterior system state covariance.

In this embodiment, the above-mentioned executor may perform a Kalman filter update step. Specifically, based on the magnetic field strength information at the current time, the above-mentioned executor may, after determining the magnetic field strength information as an observation value, determine an observation residual for the magnetometer in various ways, and thereby update the prior estimated system state vector and the prior estimated system state covariance, to obtain the posterior system state vector and the posterior system state covariance. As an example, the above-mentioned executor may acquire the observation value for the magnetometer at the current time, and the magnetometer intrinsic parameter bias, and thereby calculating the observation residual for the magnetometer, and updating the prior estimated system state vector and the prior estimated system state covariance by using the observation residual for the magnetometer to obtain the posterior system state vector and the posterior system state covariance.

Step 229: acquiring, from the posterior system state vector, updated attitude information as attitude information of the device at the current time.

In this embodiment, after obtaining the posterior system state vector, the above-mentioned executor may obtain the updated attitude information from the posterior system state vector, and determine the attitude information as the attitude information of the device at the current time.

It may be understood that the posterior system state vector and the posterior system state covariance obtained in the present execution of the attitude information calibration step may be used as a system state vector and a system state covariance that need to be acquired in the execution of the attitude information calibration step at the next time.

Step 230: in response to determining that the device is in an operating state, collecting detection information at the next time as the detection information at the current time, and determining the posterior system state vector and the posterior system state covariance as the system state vector and the system state covariance, performing the attitude information calibration step.

In this embodiment, the above-mentioned executor may determine whether the device such as a head-mounted display device whose attitude information is to be predicted is still in the operating state. If the device is still in the operating state, the device may continue to collect measurement values from the gyroscope sensor and the magnetometer, and therefore, the above-mentioned executor may continue to acquire the detection information at the current time. Then, the above-mentioned executor may determine the posterior system state vector and the posterior system state covariance obtained at step 227 respectively as the system state vector and the system state covariance, so that the above-mentioned executor may continue to execute the next round of attitude information calibration steps after obtaining the posterior system state vector and the posterior system state covariance. It may be understood that if the above-mentioned device stops operating, the prediction of the attitude information of the device may be stopped.

It may be understood that after the posterior system state vector and the posterior system state covariance are obtained from the present execution of the attitude information calibration step, not only can calibrated attitude information be obtained, but also a corrected gyroscope bias and magnetometer intrinsic parameter bias can be obtained. Then, the next attitude information calibration step may be executed by using the calibrated attitude information, the corrected gyroscope bias and magnetometer intrinsic parameter bias, and the like, so as to continue to correct the gyroscope bias and the magnetometer intrinsic parameter bias, and the like based on the present execution. Based on this, the attitude information is executed cyclically, so that the gyroscope bias and the magnetometer intrinsic parameter bias can be corrected continuously, making the deviation between the calibrated attitude information and a theoretical value smaller and smaller, thereby improving the accuracy of the obtained attitude information.

In the method provided in the above embodiment of the present application, the device includes a magnetometer and a gyroscope sensor. A system state vector and a system state covariance of the device are input during a Kalman filter propagation process to obtain a prior estimated system state vector and a prior estimated system state covariance. The prior estimated system state vector and the prior estimated system state covariance, as well as an observation value for the magnetometer are input during a Kalman filter update process, so that a posterior system state vector and a posterior system state covariance can be obtained. Magnetic field strength information can usually be continuously obtained during operation of the device. Therefore, a magnetometer intrinsic parameter bias can be continuously corrected during cyclic execution of the attitude information calibration step, so that the magnetometer intrinsic parameter bias is continuously corrected during use of the device, and is further fed back to the next execution of the attitude information calibration step, thereby continuously improving the accuracy of the attitude information of the device.

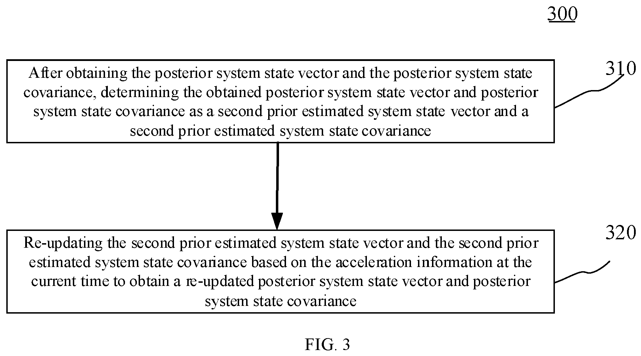

Referring next to Fig. 3, a flow 300 of another embodiment of a method for estimating an attitude of a device according to the present application is shown. In this embodiment, the device whose attitude information is to be estimated may further include an acceleration sensor. Therefore, the above-mentioned executor may collect measurement values from the gyroscope sensor, the acceleration sensor and the magnetometer, thereby obtaining detection information including angular velocity information, acceleration information, and magnetic field strength information. Therefore, compared with the embodiment shown in Fig. 2, in the method for estimating an attitude of a device disclosed in this embodiment, due to the presence of the accelerometer sensor, in the attitude information calibration step, the above-mentioned executor may continue to execute a Kalman filter update step based on the accelerometer after executing a Kalman filter update step based on the magnetometer corresponding to step 227. The specific process is as follows:

Step 310: after obtaining the posterior system state vector and the posterior system state covariance, determining the obtained posterior system state vector and posterior system state covariance as a second prior estimated system state vector and a second prior estimated system state covariance.

In this embodiment, based on the posterior system state vector and the posterior system state covariance obtained at step 227, the above-mentioned executor may determine the obtained posterior system state vector and posterior system state covariance as the second prior system state vector and the second prior system state covariance.

Step 320: re-updating the second prior estimated system state vector and the second prior estimated system state covariance based on the acceleration information at the current time to obtain a re-updated posterior system state vector and posterior system state covariance.

In this embodiment, based on the acceleration information at the current time, the above-mentioned executor may, after determining the acceleration information as an observation value, determine an observation residual for the acceleration sensor in various ways, and thereby update the second prior estimated system state vector and the second prior estimated system state covariance, to obtain a posterior system state vector and a posterior system state covariance. The posterior system state vector and the posterior system state covariance may be a re-updated posterior system state vector and posterior system state covariance again. It may be understood that, in this embodiment, the above-mentioned executor may acquire attitude information from a re-updated posterior system state vector, and then determine the attitude information as attitude information of the above-mentioned device at the current time. As an example, the above-mentioned executor may obtain the observation value for the acceleration sensor at the current time, calculate the observation residual for the acceleration sensor, and update the second prior estimated system state vector and the second prior estimated system state covariance by using the observation residual for the acceleration sensor to obtain the re-updated posterior system state vector and posterior system state covariance. Here, the second prior estimated system state vector and the second prior estimated system state covariance are different from the prior estimated system state vector and the prior estimated system state covariance in the embodiment shown in Fig. 2.

In some optional implementations, compared with the embodiment shown in Fig. 2, in the method for estimating an attitude of a device disclosed in the implementations, in the attitude information calibration step, the above-mentioned executor may also execute the Kalman filter update step based on the accelerometer before executing the Kalman filter update step based on the magnetometer corresponding to step 227. Here, there is no limitation on the sequential order of the two steps.

Compared with the embodiment shown in Fig. 2, the method provided in the above embodiment of the present application updates the prior estimated system state vector and the prior estimated system state covariance by using the observation value for the magnetometer and the observation value for the accelerometer, to obtain the posterior system state vector and the posterior system state vector covariance. This further improves an effect of correcting the gyroscope bias and the magnetometer intrinsic parameter bias, and further improves the accuracy of the calibrated attitude information.

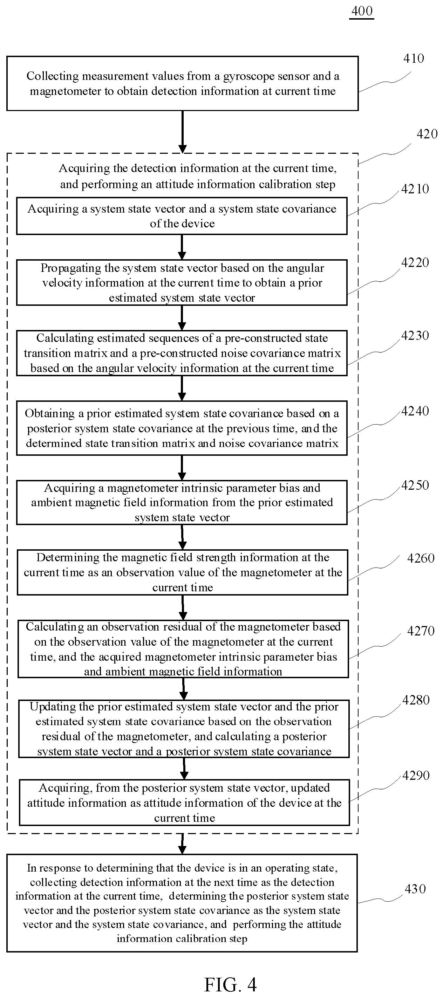

Referring further to Fig. 4, a flow 400 of yet another embodiment of a method for estimating an attitude of a device according to the present application is shown. In this embodiment, the method for estimating an attitude of a device may include the following steps:

Step 410: collecting measurement values from a gyroscope sensor and a magnetometer to obtain detection information at a current time. The detection information includes angular velocity information and magnetic field strength information.

In this embodiment, step 410 is substantially the same as step 210 in the above embodiment and will not be described here.

Step 420: acquiring the detection information at the current time, and performing an attitude information calibration step. The attitude information calibration step may be as illustrated in 4210 to 4280:

Step 4210: acquiring a system state vector and a system state covariance of the device.

The system state vector may include attitude information of the device, a gyroscope bias, a magnetometer intrinsic parameter bias, and ambient magnetic field information.

In this embodiment, after acquiring the angular velocity information at the current time and the magnetic field strength information at the current time, the above-mentioned executor may acquire the system state vector and the system state vector covariance in various ways. When the pose information calibration step is performed, the system state vector and the system state vector covariance acquired by the above-mentioned executor are the latest system state vector and system state covariance existing in the system up to the current time. As an example, the above-mentioned executor may determine a posterior system state vector and a posterior system state covariance obtained from the last execution of the attitude information calibration step as the system state vector and the system state vector covariance that need to be acquired for the present execution of the attitude information calibration step. The system state vector may include attitude information of the device, a gyroscope bias, a magnetometer intrinsic parameter bias, and ambient magnetic field information. Therefore, if the system state vector acquired by the above-mentioned executor is the posterior system state vector obtained from the last execution of the attitude information calibration step, the system state vector acquired by the above-mentioned executor may include the posterior system state vector obtained from the last execution of the attitude information calibration step. The system state vector may include updated attitude information, gyroscope bias, magnetometer intrinsic parameter bias, and ambient magnetic field information. Using the current time represented by k+1 as an example, the system state vector and the system state covariance acquired by the above-mentioned executor may be a posterior system state vector $x_k = [\,^{Ik}q_G, b_g, b_m, \,^Gm]$ and a posterior system state covariance Pk obtained from the execution of the attitude information calibration step at the previous time k.

In some optional implementations, the system state vector and the system state vector covariance acquired by the above-mentioned executor in the present execution of the attitude information calibration step may also be a pre-constructed initialized system state vector $x = [\,^Iq_G, b_g, b_m, \,^Gm]$ and a pre-constructed system state vector covariance P0. In this case, the above-mentioned executor may use the pre-constructed initialized system state vector and the pre-constructed system state vector covariance respectively as the system state vector and the system state covariance that the above-mentioned executor needs to acquire in order to execute the attitude information calibration step, so as to facilitate the present execution of the attitude information calibration step. It may be understood that if the system state vector acquired by the above-mentioned executor is an initialized system state vector, the system state vector may include attitude information, a gyroscope bias, a magnetometer intrinsic parameter bias, and ambient magnetic field information in an initial state.

It may be understood that the system state vector $x_k = [\,^{Ik}q_G, b_g, b_m, \,^Gm]$ in the device system may include a 13-dimensional vector with 12 degrees of freedom, including attitude information (the attitude information may be represented by a quaternion, which is a four-dimensional vector but actually has only three degrees of freedom), a gyroscope bias bg (the gyroscope bias may be a three-dimensional vector), a magnetometer intrinsic parameter bias bm (the magnetometer intrinsic parameter bias may be a three-dimensional vector), and ambient magnetic field information Gm (the ambient magnetic field may be a three-dimensional vector). $^Iq_G$ A corresponding covariance matrix P is a 12×12 matrix representing the degrees of freedom in the system state vector and correlations among the degrees of freedom.

The gyroscope bias bg is a quantity bound to the gyroscope sensor and is related to numerous factors, such as temperature, sensor stress, etc., and is also time-varying. The magnetometer intrinsic parameter bias bm may include a hard magnetic bias and a soft magnetic bias. Since the majority of magnetometers are dominated by the hard magnetic bias compared to the soft magnetic bias, the modeling of bm here only includes the hard magnetic bias, which is also a time-varying quantity bound to the magnetometer and usually changes due to the influence of magnetization, demagnetization, and other factors of the magnetometer. The ambient magnetic field Gm is a quantity closely related to the environment, and can be approximated as a local Earth's magnetic field in an open space, but is subject to interference from surrounding magnetic fields in an indoor environment. Therefore, the ambient magnetic field Gm usually changes as the geographic location changes over time. Therefore, in the embodiment of the present application, the system state vector includes not only the attitude information, the gyroscope bias bg, and the magnetometer intrinsic parameter bias bm, but also the ambient magnetic field information Gm. The influence on the magnetometer by the change of the usage location of the device to be detected can be considered as well during the attitude information estimation process, so that the accuracy of the estimated attitude information can be further improved.

It may be understood that the system state vector of the above-mentioned device may be initialized in the following manner. Regarding to initialization of the attitude $^Iq_G$ of the device, it is assumed that an actual acceleration of the device is zero in the initial state (when the acceleration is 0, the magnitude of the measurement value of the accelerometer is approximately equal to gravity). Therefore, a pitch angel and a roll angle in a gravity coordinate system may be obtained based on a relationship between a measurement value of a three-axis accelerometer and gravity, and a yaw angle may be set to 0 in the gravity coordinate system (i.e., an initial yaw angle is 0, and subsequent yaw angles may be calculated with respect to the initial yaw angle). Correspondingly, a corresponding state covariance may be set.

Regarding to initialization of bg, bm, Gm: the three system state vectors may be initialized based on prior information, if available. For example, if prior information is available, the three system state vectors are assigned using the prior information during the initialization. If no prior information is available, the three system state vectors may be initialized to 0.

Further, the above-mentioned system state covariance may be initialized in the following manner: a smaller error state covariance may be set if prior information is available; and a larger error state covariance may be set if no prior information is available.

Step 4220: propagating the system state vector based on the angular velocity information at the current time to obtain a prior estimated system covariance.

In this embodiment, after obtaining the angular velocity $\omega_{m,k+1}$ collected at the current time, the above-mentioned executor may propagate the system state vector for the next time. For the specific propagation method, reference may be made to step 223 in the above embodiment, and this will not be described here.

Step 4230: calculating estimated sequences of a pre-constructed state transition matrix and a pre-constructed noise covariance matrix based on the angular velocity information at the current time.

The pre-constructed state transition matrix includes an identity matrix corresponding to the ambient magnetic field information, and the pre-constructed noise covariance matrix includes an identity matrix corresponding to the ambient magnetic field information.

Step 4240: obtaining a prior estimated system state covariance based on a posterior system state covariance at the previous time, and the determined state transition matrix and noise covariance matrix.

In this embodiment, the system state covariance is propagated by the following formula: $P_{k+1|k} = \phi P_{k|k}\phi^T + Q_d$, wherein $P_{k+1|k}$ is a prior estimated system state covariance at the current time k+1, $P_{k|k}$ is a posterior system state covariance at the previous time k, $\Phi$ is a discrete-time state transition matrix, and $Q_d$ is a discrete-time system noise covariance.

The discrete-time state transition matrix is calculated by the following formula:

$$\Phi = \begin{bmatrix} \Theta & \Psi & 0_{3\times3} & 0_{3\times3} \\ 0_{3\times3} & I_{3\times3} & 0_{3\times3} & 0_{3\times3} \\ 0_{3\times3} & 0_{3\times3} & I_{3\times3} & 0_{3\times3} \\ 0_{3\times3} & 0_{3\times3} & 0_{3\times3} & I_{3\times3} \end{bmatrix},$$

wherein $\Phi$ is the discrete-time state transition matrix, $\Theta$ is used to represent a state transition matrix between an attitude at the previous time and at the next time, and $\Psi$ is used to represent a state transition matrix between a gyroscope bias at the previous time and the attitude at the next time.

$\Theta = R(^{Ik+1}q_{Ik})$, wherein $R(^{Ik+1}q_{Ik})$ is used to convert $^{Ik+1}q_{Ik}$ from the quaternion into a 3×3 rotation matrix.

$$\Psi = -I_{3\times3}\Delta t + \frac{1}{|\bar{\omega}|^2}\left(1 - cos(|\bar{\omega}|\Delta t)\right)\lfloor\hat{\omega}\times\rfloor - \frac{1}{|\bar{\omega}|^3}\left(|\bar{\omega}|\Delta t - sin(|\bar{\omega}\Delta t|)\right)\lfloor\bar{\omega}\rfloor^2$$, wherein $\bar{\omega}$ is used

to represent an average value of a corrected angular velocity, and $\Delta t$ is used to represent a time interval between the time k and the time k+1.

The discrete-time system noise covariance is calculated by the following formula:

$$Q_d = \begin{bmatrix} Q_{11} & Q_{12} & 0_{3\times3} & 0_{3\times3} \\ Q_{12}^T & Q_{22} & 0_{3\times3} & 0_{3\times3} \\ 0_{3\times3} & 0_{3\times3} & \sigma_{bm}I_{3\times3} & 0_{3\times3} \\ 0_{3\times3} & 0_{3\times3} & 0_{3\times3} & \sigma_{mg}I_{3\times3} \end{bmatrix}$$

$$Q_{11} = \sigma_r^2\Delta t\bullet I_{3\times3} + \sigma_\omega^2\bullet(I_{3\times3}\frac{\Delta t^3}{3} + \frac{\frac{(|\bar{\omega}|\Delta t)^3}{3} + 2\sin(|\bar{\omega}|\Delta t) - 2|\bar{\omega}|\Delta t}{|\bar{\omega}|^5}\bullet\lfloor\bar{\omega}\times\rfloor^2)$$

$$Q_{12} = -\sigma_\omega^2\bullet(I_{3\times3}\frac{\Delta t^2}{2} - \frac{|\bar{\omega}|\Delta t - \sin(|\bar{\omega}|\Delta t)}{|\bar{\omega}|^3}\bullet\lfloor\bar{\omega}\times\rfloor + \frac{\frac{(|\bar{\omega}|\Delta t)^2}{2} + \cos(|\bar{\omega}|\Delta t) - 1}{|\bar{\omega}|^4}\bullet\lfloor\bar{\omega}\times\rfloor^2)$$

$$Q_{22} = \sigma_r^2\Delta t\bullet I_{3\times3}$$

$Q_{11}$ is used to represent a discrete-time noise covariance of the attitude, $Q_{12}$ is used to represent a discrete-time cross-correlation noise covariance between the attitude and the gyroscope bias, $Q_{22}$ is used to represent a discrete-time noise covariance of the gyroscope bias, $\sigma_r$ is used to represent a measurement noise coefficient of the gyroscope sensor, $\sigma_\omega$ is used to represent a random walk coefficient of the gyroscope, $\sigma_{bm}$ is used to represent a coefficient of magnetometer intrinsic parameter stability, and $\sigma_{mg}$ is used to represent a degree of variation of the ambient magnetic field.

Step 4250: acquiring a magnetometer intrinsic parameter bias and ambient magnetic field information from the prior estimated system state vector.

Step 4260: determining the magnetic field strength information at the current time as an observation value for the magnetometer at the current time.

Step 4270: calculating an observation residual for the magnetometer based on the observation value for the magnetometer at the current time, and the acquired magnetometer intrinsic parameter bias and ambient magnetic field information.

In this embodiment, the observation residual $\tilde{Z}$ for the magnetometer may be calculated by the following formula: $\tilde{z} = m_m - R({}^{Ik+1}q_G) \cdot {}^G m - b_m$, wherein $m_m$ may represent the observation value of the magnetometer at the current time, $b_m$ may be the acquired magnetometer intrinsic parameter bias, ${}^G m$ may be the acquired ambient magnetic field information, and ${}^{Ik+1}q_{Ik}$ is an amount of rotational change of the device at the current time k+1 with respect to the previous time k.

Step 4280: updating the prior estimated system state vector and the prior estimated system state covariance based on the observation residual for the magnetometer, calculating a posterior system state vector and a posterior system state covariance.

In this embodiment, based on the observation residual for the magnetometer calculated at step 4270, a Jacobian H of the observation residual for the magnetometer with respect to an error state vector may be calculated by the following formula:

$H = [H_{\delta\theta} | 0_{3\times3} | H_{G\tilde{m}} | H_{b\tilde{m}}]$, wherein $\mathbf{H}_{\delta\theta} = \lfloor ({}^I R_G {}^G m) \times \rfloor$, $H_{\delta\theta}$ is used to represent a Jacobian of an error with respect to the attitude, and ${}^I R_G$ is a rotation matrix corresponding to the attitude information in the current system state vector.

$H_{G\tilde{m}} = {}^I R_G$, wherein $H_{G\tilde{m}}$ is used to represent a Jacobian of the error with respect to an ambient magnetic field.

$H_{b\tilde{m}} = I_{3\times3}$, wherein $H_{b\tilde{m}}$ is used to represent a Jacobian of the error with respect to the magnetometer intrinsic parameter bias.

Then, a residual covariance S may be calculated by the following formula:

$S = HP_{k-1|k}H^T + R$, wherein R is a preset value related to noise of the magnetometer.

A Kalman gain is: $K = P_{k+1|k}H^TS^{-1}$,

An error state correction vector is calculated: $\Delta x = K\tilde{z}$.

The system state vector is updated: $x_{k+1} = x_{k+1|k} \oplus \Delta x$

The system state covariance is updated: $P_{k+1|k+1} = (I_{6\times6} - KH)P_{k+1|k}(I_{6\times6} - KH)^T$.

Step 4290: acquiring, from the posterior system state vector, updated attitude information as attitude information of the device at the current time.

In this embodiment, based on the system state vector obtained by updating at step 4270, the above-mentioned executor may obtain attitude information therefrom. The attitude information may serve as attitude information of the above-mentioned device at the current time.

Step 430: in response to determining that the device is in an operating state, acquiring detection information at the next time as the detection information at the current time, and by determining the posterior system state vector and the posterior system state covariance as the system state vector and the system state covariance, performing the attitude information calibration step.

In this embodiment, step 430 is substantially the same as step 230 in the above embodiment and will not be described here.

Compared with the embodiment corresponding to Fig. 2, in the method provided in the above embodiment of the present application, a system state vector and a system state covariance of the device are input during a Kalman filter propagation process to obtain a prior estimated system state vector and a prior estimated system state covariance. The prior estimated system state vector and the prior estimated system state covariance, as well as an observation value for the magnetometer are input during a Kalman filter update process, so that a posterior system state vector and a posterior system state covariance can be obtained. Magnetic field strength information can usually be continuously obtained during operation of the device. Therefore, during cyclic execution of the attitude information calibration step, considering that with changes in the geographic location of the ambient magnetic field during use of the device, the ambient magnetic field information may change accordingly, the method disclosed in this embodiment can continuously correct the magnetometer intrinsic parameter bias and the ambient magnetic field information, so that the magnetometer intrinsic parameter bias and the ambient magnetic field information are continuously corrected during use of the device, and are further fed back to the next execution of the attitude information calibration step, thereby achieving an effect of further improving the accuracy of the attitude information of the device.

In some optional embodiments, a method for estimating an attitude of a device is disclosed, the device includes a gyroscope sensor and a magnetometer. The method includes: S1: collecting measurement values from the gyroscope sensor and the magnetometer to obtain detection information at a current time, wherein the detection information includes angular velocity information and magnetic field strength information; S2: acquiring a system state vector and a system state covariance of the device, wherein the system state vector includes attitude information of the device, a gyroscope bias, and a magnetometer intrinsic parameter bias; S3: inputting the acquired system state vector and system state covariance during a Kalman filter process to obtain a prior estimated system state vector and a prior estimated system state covariance based on the detection information; S4: inputting the prior estimated system state vector and the prior estimated system state covariance during a Kalman filter update process to obtain a posterior system state vector and a posterior system state covariance, wherein updated attitude information in the posterior system state vector serves as attitude information of the device at the current time; and S5: determining obtained detection information at respective times continuously during operation of the device as detection information at the current time, and executing steps S2 to S4 to obtain posterior system state vectors and posterior system state covariances at the respective times.

In some optional embodiments, a method for estimating an attitude of a device is disclosed, the device includes a gyroscope sensor and a magnetometer. The method includes: collecting measurement values from the gyroscope sensor and the magnetometer to obtain detection information at a current time, wherein the detection information includes angular velocity information and magnetic field strength information; acquiring the detection information at the current time, and performing an attitude information correction step: acquiring a system state vector and a system state covariance of the device, wherein the system state vector includes attitude information of the device, a gyroscope bias, a magnetometer intrinsic parameter bias, and ambient magnetic field information; propagating the system state vector based on the angular velocity information at the current time to obtain a prior estimated system state vector; propagating the system state covariance based on the angular velocity information at the current time to obtain a prior estimated system state covariance; updating the prior estimated system state vector and the prior estimated system state covariance based on the magnetic field strength information at the current time to obtain a posterior system state vector and a posterior system state covariance; and acquiring, from the posterior system state vector, updated attitude information as attitude information of the device at the current time; and in response to determining that the device is in an operating state, acquiring detection information at the next time as the detection information at the current time, determining the posterior system state vector and the posterior system state covariance as the system state vector and the system state covariance, and performing the attitude information calibration step.

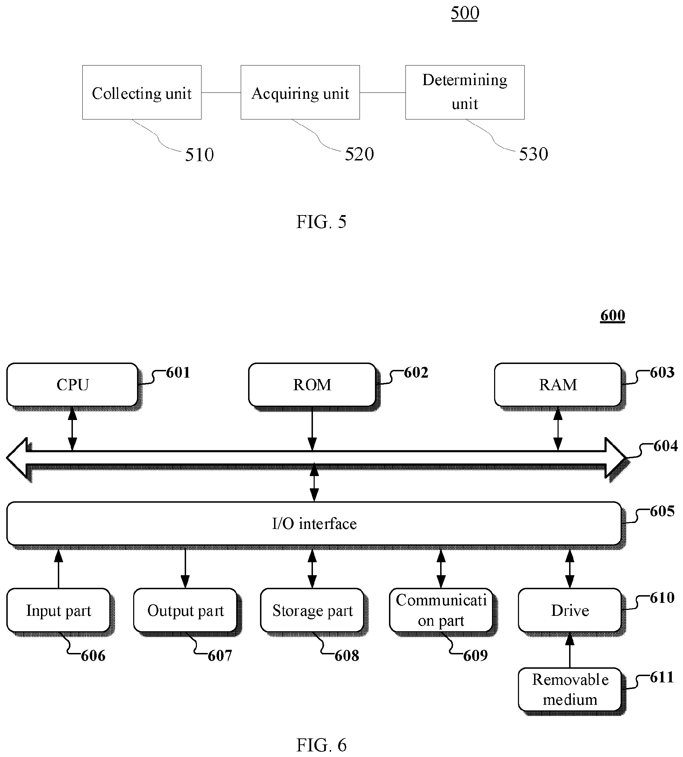

Referring further to Fig. 5, as an implementation of the method shown in the figures described above, the present application provides an embodiment of an apparatus for estimating an attitude of a device. The apparatus embodiment corresponds to the method embodiment shown in Fig. 2, and the apparatus may be specifically applied in various electronic devices.

As shown in Fig. 5, in the apparatus 500 for estimating an attitude of a device in this embodiment, the device including a gyroscope sensor and a magnetometer, the apparatus 500 includes: an collecting unit 510 configured to collect measurement values from the gyroscope sensor and the magnetometer to obtain detection information at a current time, wherein the detection information includes angular velocity information and magnetic field strength information; an acquiring unit 520 configured to acquire the detection information at the current time, and perform an attitude information correction step which includes acquiring a system state vector and a system state covariance of the device, wherein the system state vector includes attitude information of the device, a gyroscope bias, and a magnetometer intrinsic parameter bias; propagating the system state vector based on the angular velocity information at the current time to obtain a prior estimated system state vector; propagating the system state covariance based on the angular velocity information at the current time to obtain a prior estimated system state covariance; updating the prior estimated system state vector and the prior estimated system state covariance based on the magnetic field strength information at the current time to obtain a posterior system state vector and a posterior system state covariance; and acquiring, from the posterior system state vector, updated attitude information as attitude information of the device at the current time; and a determining unit 530 configured to, in response to determining that the device is in an operating state, acquire detection information at the next time as the detection information at the current time, and determine the posterior system state vector and the posterior system state covariance as the system state vector and the system state covariance, and perform the attitude information calibration step.

In some optional implementations of this embodiment, the device further includes an acceleration sensor, the detection information further includes acceleration information, and the apparatus 500 further include: an acceleration information collecting unit configured to collect measurement values from the acceleration sensor to obtain acceleration information at the current time; and the attitude information calibration step in the acquisition unit further includes: after obtaining the posterior system state vector and the posterior system state covariance, determining the obtained posterior system state vector and posterior system state covariance as a second prior estimated system state vector and a second prior estimated system state covariance; and re-updating the second prior estimated system state vector and the second prior estimated system state covariance based on the acceleration information at the current time to obtain a re-updated posterior system state vector and posterior system state covariance.

In some optional implementations of this embodiment, the acquiring unit 520 is further configured to: in the attitude information calibration step, propagate the system state vector based on the angular velocity information at the current time to obtain a prior estimated system state vector, including: determining an amount of rotational change of the device based on the angular velocity information at the current time and angular velocity information at the previous time, wherein the amount of rotational change represents a degree of rotational change at the current time relative to the previous time; acquiring attitude information of the device at the previous time; performing rotation-based computation on the acquired attitude information at the previous time based on the determined amount of rotational change, and predicting attitude information of the device at the current time to obtain the prior estimated system state vector.

In some optional implementations of this embodiment, the system state vector further includes ambient magnetic field information; and the acquiring unit 520 is further configured to: in the attitude information calibration step, propagate the system state covariance based on the angular velocity information at the current time to obtain a prior estimated system state covariance, including: calculating estimated sequences of a pre-constructed state transition matrix and a pre-constructed noise covariance matrix based on the angular velocity information at the current time, wherein the pre-constructed state transition matrix includes an identity matrix corresponding to the ambient magnetic field information, and the pre-constructed noise covariance matrix includes an identity matrix corresponding to the ambient magnetic field information; and obtaining the prior estimated system state covariance based on a posterior system state covariance at the previous time, and the determined state transition matrix and noise covariance matrix; and in the attitude information calibration step, update the prior estimated system state vector and the prior estimated system state covariance based on the magnetic field strength information at the current time to obtain a posterior system state vector and a posterior system state covariance, including: acquiring the magnetometer intrinsic parameter bias and the ambient magnetic field information from the prior estimated system state vector; determining the magnetic field strength information at the current time as an observation value of the magnetometer at the current time; calculating an observation residual of the magnetometer based on the observation value of the magnetometer at the current time, and the acquired magnetometer intrinsic parameter bias and ambient magnetic field information; and updating the prior estimated system state vector and the prior estimated system state covariance based on the observation residual of the magnetometer, calculating the posterior system state vector and the posterior system state covariance.

In some optional implementations of this embodiment, the apparatus 500 further includes an initialization unit configured to, in response to determining that the device is activated, determine a post-initialization system state vector and a post-initialization system state covariance as a current system state vector and a current system state covariance of the device.

The units recited in the apparatus 500 correspond to the steps in the method described with reference to Figs. 2, 3 and 4. Therefore, the operations and features described above with respect to the method are also applicable to the apparatus 500 and the units contained therein, and will not be repeated here.

Referring to Fig. 6 below, a schematic structural diagram of a computer system 600 of an electronic device suitable for implementing the embodiments of the present application is shown. The electronic device shown in Fig. 6 is only an example, and should not bring about any limitation on the functions and scope of use of the embodiments of the present application.

As shown in Fig. 6, the computer system 600 includes a central processing unit (CPU) 601, which can perform various appropriate actions and processing according to a program stored in a read-only memory (ROM) 602 or a program loaded into a random access memory (RAM) 603 from a storage part 608. In the RAM 603, various programs and data required for the operation of the system 600 are also be stored. The CPU 601, the ROM 602, and the RAM 603 are connected to each other through a bus 604. An input/output (I/O) interface 605 is also connected to the bus 604.

The following components are connected to the I/O interface 605: an input portion 606 including a keyboard, a mouse, and the like; an output part 607 including a cathode ray tube (CRT), a liquid crystal display (LCD), and the like, and a speaker, and the like; a storage part 608 including a hard disk, and the like; and a communication part 609 including a network interface card such as a LAN card, a modem, and the like. The communication part 609 performs communication processing via a network such as the Internet. A drive 610 is also connected to the I/O interface 605 as needed. A removable medium 611, such as a magnetic disk, an optical disk, a magnetic optical disk, a semiconductor memory, or the like, is mounted on the drive 610 as needed, so that a computer program read therefrom is installed into the storage part 608 as needed.

In particular, according to an embodiment of the present disclosure, the process described above with reference to the flowchart may be implemented as a computer software program. For example, this embodiment of the present disclosure includes a computer program product, which includes a computer program carried on a computer-readable medium, wherein the computer program includes program code for performing the method shown in the flowchart. In such an embodiment, the computer program may be downloaded and installed from a network through the communication part 609, and/or installed from the removable medium 611. When the computer program is executed by the central processing unit (CPU) 601, the above-mentioned functions defined in the method of the present application are performed. It is to be noted that the computer-readable medium in the present application may be a computer-readable signal medium, a computer-readable storage medium, or any combination thereof. The computer-readable storage medium may be, for example but not limited to, an electric, magnetic, optical, electromagnetic, infrared, or semiconductor system, apparatus, or device, or any combination thereof. More specific examples of the computer-readable storage medium may include but are not limited to: an electrical connection with one or more conducting wires, a portable computer magnetic disk, a hard disk, a random access memory (RAM), a read only memory (ROM), an erasable programmable read only memory (EPROM or flash memory), an optical fiber, a portable compact disk-read only memory (CD-ROM), an optical storage device, a magnetic storage device, or any suitable combination thereof. In the present application, the computer-readable storage medium may be any tangible medium that contains or stores a program that can be used by or in connection with an instruction execution system, apparatus or device. In the present application, the computer-readable signal medium may include a data signal propagated in a baseband or as a part of a carrier, the data signal carrying computer-readable program code. The propagated data signal may take various forms, including but not limited to an electromagnetic signal, an optical signal, or any suitable combination thereof. The computer-readable signal medium may also be any computer-readable medium other than a computer-readable storage medium, and the computer-readable medium can send, propagate or transmit a program for use by or in connection with an instruction execution system, apparatus or device. The program codes included in the computer-readable medium may be transmitted by using any appropriate medium, including but not limited to a wireless, wire, optical cable, or RF medium, or any suitable combination thereof.

The computer program code for performing the operations of the present application may be written in one or more programming languages or a combination thereof, the programming languagesincluding an object-oriented programming languagesuch as Java, Smalltalk, or C++, and also including a conventional procedural programming language such as "C" or similar programming language. The program code may be executed entirely on a user computer, partly on the user computer, as a standalone software package, partly on the user computer and partly on a remote computer, or entirely on the remote computer or server. In the case where the remote computer is involved, the remote computer may be connected to the user computer through any type of network, including a local area network (LAN) or a wide area network (WAN), or may be connected to an external computer (for example, connected through the Internet using an Internet service provider).

The flowcharts and block diagrams in the accompanying drawings illustrate the architecture, functions, and operations that may be implemented in the system, method, and computer program product according to various embodiments of the present application. In this regard, each block in the flowcharts or block diagrams may represent a module, program segment, or part of code. The module, program segment, or part of code contains one or more executable instructions for implementing specified logical functions. It should also be noted that, in some alternative implementations, the functions indicated in the blocks may also occur in an order different from that indicated in the accompanying drawings. For example, two blocks shown in succession can actually be performed substantially in parallel, or they can sometimes be performed in the reverse order, depending on the functions involved. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The related units described in the embodiments of the present application may be implemented by software, or may be implemented by hardware. The described units may also be provided in a processor. For example, the description may be: a processor includes a collecting unit, an acquiring unit, and a determining unit. The names of these units do not necessarily constitute a limitation on the units themselves under certain circumstances. For example, the collecting unit may also be described as "a unit that collect measurement values from a gyroscope sensor and a magnetometer to obtain detection information at a current time".

As another aspect, the present application further provides a computer-readable medium, which may be included in the apparatus described in the above embodiment, or may exist independently and not be assembled into the apparatus. The above-mentioned computer-readable medium carries one or more programs which, when executed by the apparatus, causes the apparatus to: collect measurement values from the gyroscope sensor and the magnetometer to obtain detection information at a current time, wherein the detection information includes angular velocity information and magnetic field strength information;

acquire the detection information at the current time, and perform an attitude information correction step: acquiring a system state vector and a system state covariance of the device, wherein the system state vector includes attitude information of the device, a gyroscope bias, and a magnetometer intrinsic parameter bias; propagating the system state vector based on the angular velocity information at the current time to obtain a prior estimated system state vector; propagating the system state covariance based on the angular velocity information at the current time to obtain a prior estimated system state covariance; updating the prior estimated system state vector and the prior estimated system state covariance based on the magnetic field strength information at the current time to obtain a posterior system state vector and a posterior system state covariance; and acquiring, from the posterior system state vector, updated attitude information as attitude information of the device at the current time; and

in response to determining that the device is in an operating state, acquire detection information at the next time as the detection information at the current time, and determine the posterior system state vector and the posterior system state covariance as the system state vector and the system state covariance, and perform the attitude information calibration step.

The foregoing descriptions are merely preferred embodiments of the present application and explanations of the applied technical principles. Those skilled in the art should understand that the scope of invention involved in the present application is not limited to the technical solutions formed by specific combinations of the foregoing technical features, and should also cover other technical solutions formed by any combination of the foregoing technical features or equivalent features thereof without departing from the foregoing inventive concept. For example, a technical solution formed by a replacement of the foregoing features with technical features with similar functions disclosed in the present application (but not limited thereto) also falls within the scope of the present application.

The foregoing descriptions are merely preferred embodiments of the present disclosure and explanations of the applied technical principles. Those skilled in the art should understand that the scope of invention involved in the embodiments of the present disclosure is not limited to the technical solutions formed by specific combinations of the foregoing technical features, and should also cover other technical solutions formed by any combination of the foregoing technical features or equivalent features thereof without departing from the foregoing inventive concept. for example, a technical solution formed by interchanging the above features with (but not limited to) technical features having similar functions disclosed in the embodiments of the present disclosure.

## Claims

1. A method for estimating an attitude of a device, the device comprising a gyroscope sensor and a magnetometer, the method comprising:

   collecting measurement values from the gyroscope sensor and the magnetometer to obtain detection information at current time, wherein the detection information comprises angular velocity information and magnetic field strength information;
   acquiring the detection information at the current time, and performing an attitude information correction step, the attitude information correction step comprising:

      acquiring a system state vector and a system state covariance of the device, wherein the system state vector comprises attitude information of the device, a gyroscope bias, and a magnetometer intrinsic parameter bias;
      propagating the system state vector based on the angular velocity information at the current time to obtain a prior estimated system state vector;
      propagating the system state covariance based on the angular velocity information at the current time to obtain a prior estimated system state covariance;
      updating the prior estimated system state vector and the prior estimated system state covariance based on the magnetic field strength information at the current time to obtain a posterior system state vector and a posterior system state covariance; and
      acquiring, from the posterior system state vector, updated attitude information as attitude information of the device at the current time; and

   in response to determining that the device is in an operating state, acquiring detection information at next time as the detection information at the current time, determining the posterior system state vector and the posterior system state covariance as the system state vector and the system state covariance, and performing the attitude information calibration step.

2. The method according to claim 1, wherein the system state vector further comprises ambient magnetic field information; and the attitude information calibration step comprises:

   acquiring the system state vector and the system state covariance of the device, wherein the system state vector comprises the attitude information of the device, the gyroscope bias, the magnetometer intrinsic parameter bias, and the ambient magnetic field information;

propagating the system state vector based on the angular velocity information at the current time to obtain the prior estimated system state vector;

propagating the system state covariance based on the angular velocity information at the current time to obtain the prior estimated system state covariance;

updating the prior estimated system state vector and the prior estimated system state covariance based on the magnetic field strength information at the current time, the magnetometer intrinsic parameter bias, and the ambient magnetic field information to obtain the posterior system state vector and the posterior system state covariance; and

acquiring, from the posterior system state vector, the updated attitude information as the attitude information of the device at the current time.

3. The method according to claim **1,** wherein the device further comprises an acceleration sensor, the detection information further comprises acceleration information, and the method further comprises:

collecting measurement values from the acceleration sensor to obtain acceleration information at the current time; and

the attitude information calibration step further comprises:

after obtaining the posterior system state vector and the posterior system state covariance, determining the obtained posterior system state vector and posterior system state covariance as a second prior estimated system state vector and a second prior estimated system state covariance; and

re-updating the second prior estimated system state vector and the second prior estimated system state covariance based on the acceleration information at the current time to obtain a re-updated posterior system state vector and posterior system state covariance.

4. The method according to claim 1, wherein propagating the system state vector based on the angular velocity information at the current time to obtain a prior estimated system state vector comprises:

determining an amount of rotational change of the device based on the angular velocity information at the current time and angular velocity information at previous time, wherein the amount of rotational change represents a degree of rotational change at the current time relative to the previous time;

acquiring attitude information of the device at the previous time;

performing rotation-based computation on the acquired attitude information at the previous time based on the determined amount of rotational change, and predicting attitude information of the device at the current time to obtain the prior estimated system state vector.

5. The method according to one of claims 1 to 4, wherein the system state vector further comprises ambient magnetic field information; and

propagating the system state covariance based on the angular velocity information at the current time to obtain a prior estimated system state covariance comprises:

calculating estimated sequences of a pre-constructed state transition matrix and a pre-constructed noise covariance matrix based on the angular velocity information at the current time, wherein the pre-constructed state transition matrix comprises an identity matrix corresponding to the ambient magnetic field information, and the pre-constructed noise covariance matrix comprises an identity matrix corresponding to the ambient magnetic field information; and

obtaining the prior estimated system state covariance based on a posterior system state covariance at previous time, and the determined state transition matrix and noise covariance matrix; and

updating the prior estimated system state vector and the prior estimated system state covariance based on the magnetic field strength information at the current time to obtain a posterior system state vector and a posterior system state covariance comprises:

acquiring the magnetometer intrinsic parameter bias and the ambient magnetic field information from the prior estimated system state vector;

determining the magnetic field strength information at the current time as an observation value for the magnetometer at the current time;

calculating an observation residual for the magnetometer based on the observation value for the magnetometer at the current time, and the acquired magnetometer intrinsic parameter bias and ambient magnetic field information; and

updating the prior estimated system state vector and the prior estimated system state covariance based on the observation residual for the magnetometer, calculating the posterior system state vector and the posterior system state covariance.

6. The method according to one of claims 1 to 5, wherein the method further comprises:

in response to determining that the device is activated, performing system initialization of the device to obtain a post-initialization system state vector and a post-initialization system state covariance;

determining the post-initialization system state vector and the post-initialization system state covariance as a current system state vector and a current system state covariance of the device; and

acquiring the detection information at the current time, and performing the attitude information calibration step.

7. The method according to claim 6, wherein the post-initialization system state vector further comprises device attitude information in an initial state; and

the device attitude information in the initial state is achieved through the following steps: setting an actual acceleration of the device in the initial state to zero; obtaining a pitch angle and a roll angle in a gravity coordinate system based on a relationship between a measurement value of a three-axis accelerometer and gravity; and setting a yaw angle to zero in the gravity coordinate system.

8. The method according to claim 4, wherein determining an amount of rotational change of the device based on the angular velocity information at the current time and angular velocity information at previous time comprises:

acquiring an angular velocity at the previous time and an angular velocity at the current time;

calculating an average angular velocity between the angular velocity at the previous time and the angular velocity at the current time; and

calculating an amount of rotational change of the gyroscope based on the average angular velocity.

9. The method according to claim 4 or 8, wherein the attitude information at the current time in the prior estimated system state vector is determined by:

$^{Ik+1}q_G = q_{Ik} * {}^{Ik}q_G$, wherein $^{Ik+1}q_G$ is used to represent the attitude information of the device at current time k+1, $^{Ik}q_G$ is used to represent the attitude information of the device at previous time k, and $^{Ik+1}q_{Ik}$ is used to represent the amount of rotational change of the device at the current time k+1 with respect to the previous time k.

10. The method according to claim 1, wherein the system state covariance is propagated by the following formula: $P_{k+1|k} = \phi P_{k|k}\phi^T + Q_d$, wherein $P_{k+1|k}$ is a prior estimated system state covariance at current time k+1, $P_{k|k}$ is a posterior system state covariance at previous time k, $\Phi$ is a discrete-time state transition matrix, and $Q_d$ a discrete-time system noise covariance.

11. The method according to claim 9 or 10, wherein during the propagation of the system state vector and the system state covariance, no new detection information is generated by the gyroscope sensor and the magnetometer, and during the propagation of the system state vector and the system state covariance, the gyroscope bias and the magnetometer intrinsic parameter bias are not corrected or updated.

12. The method according to claim 1, wherein propagating the system state vector based on the angular velocity information at the current time to obtain a prior estimated system state vector comprises:

calculating a pre-constructed state transition matrix and a pre-constructed noise covariance matrix based on the angular velocity information at the current time; and

obtaining the prior estimated system state covariance based on a posterior system state covariance at previous time, and the determined state transition matrix and noise covariance matrix.

13. The method according to claim 2, wherein the gyroscope bias has a time-varying quantity bound to a gyroscope;

the magnetometer intrinsic parameter bias has a hard magnetic bias, which is a time-varying quantity bound to the magnetometer; and

the ambient magnetic field information has a magnetic field quantity related to environmental conditions that varies with at least one of time and geographic location.

**14.** An electronic device, comprising:

one or more processors; and
storage means with one or more programs stored therein, wherein
the one or more programs, when executed by the one or more processors, cause the one or more processors to implement the method of any one of claims 1 to 13.

**15.** A non-transitory computer readable storage medium configured to store computer instructions, wherein the computer instructions are configured to cause a computer to execute the method of any one of claims 1 to 13.

102

101

FIG. 1

200

Collecting measurement values from a gyroscope sensor and a magnetometer to obtain detection information at a current time — 210

Acquiring the detection information at the current time, and performing an attitude information calibration step — 220

Acquiring a system state vector and a system state covariance of the device — 221

Propagating the system state vector based on the angular velocity information at the current time to obtain a prior estimated system state vector — 223

Propagating the system state covariance based on the angular velocity information at the current time to obtain a prior estimated system state covariance — 225

Updating the prior estimated system state vector and the prior estimated system state covariance based on the magnetic field strength information at the current time to obtain a posterior system state vector and a posterior system state covariance — 227

Acquiring, from the posterior system state vector, updated attitude information as attitude information of the device at the current time — 229

In response to determining that the device is in an operating state, collecting detection information at the next time as the detection information at the current time, determining the posterior system state vector and the posterior system state covariance as the system state vector and the system state covariance, and performing the attitude information calibration step — 230

FIG. 2

<u>300</u>

| |
|---|
| After obtaining the posterior system state vector and the posterior system state covariance, determining the obtained posterior system state vector and posterior system state covariance as a second prior estimated system state vector and a second prior estimated system state covariance |

3<u>1</u>0

| |
|---|
| Re-updating the second prior estimated system state vector and the second prior estimated system state covariance based on the acceleration information at the current time to obtain a re-updated posterior system state vector and posterior system state covariance |

320

FIG. 3

400

Collecting measurement values from a gyroscope sensor and a magnetometer to obtain detection information at current time

410

Acquiring the detection information at the current time, and performing an attitude information calibration step

420

Acquiring a system state vector and a system state covariance of the device

4210

Propagating the system state vector based on the angular velocity information at the current time to obtain a prior estimated system state vector

4220

Calculating estimated sequences of a pre-constructed state transition matrix and a pre-constructed noise covariance matrix based on the angular velocity information at the current time

4230

Obtaining a prior estimated system state covariance based on a posterior system state covariance at the previous time, and the determined state transition matrix and noise covariance matrix

4240

Acquiring a magnetometer intrinsic parameter bias and ambient magnetic field information from the prior estimated system state vector

4250

Determining the magnetic field strength information at the current time as an observation value of the magnetometer at the current time

4260

Calculating an observation residual of the magnetometer based on the observation value of the magnetometer at the current time, and the acquired magnetometer intrinsic parameter bias and ambient magnetic field information

4270

Updating the prior estimated system state vector and the prior estimated system state covariance based on the observation residual of the magnetometer, and calculating a posterior system state vector and a posterior system state covariance

4280

Acquiring, from the posterior system state vector, updated attitude information as attitude information of the device at the current time

4290

In response to determining that the device is in an operating state, collecting detection information at the next time as the detection information at the current time, determining the posterior system state vector and the posterior system state covariance as the system state vector and the system state covariance, and performing the attitude information calibration step

430

FIG. 4

500

| Collecting unit | | Acquiring unit | | Determining unit |
|---|---|---|---|---|

510          520          530

FIG. 5

600

| CPU | 601 | ROM | 602 | RAM | 603 |

604

| I/O interface | 605 |

| Input part | Output part | Storage part | Communication part | Drive | 610 |

606          607          608          609

Removable medium          611

FIG. 6

## INTERNATIONAL SEARCH REPORT

| International application No. |
|---|
| **PCT/CN2023/132153** |

### A. CLASSIFICATION OF SUBJECT MATTER

G01C21/20(2006.01)i; G01C21/16(2006.01)i

According to International Patent Classification (IPC) or to both national classification and IPC

### B. FIELDS SEARCHED

Minimum documentation searched (classification system followed by classification symbols)

IPC:G01C21/-

Documentation searched other than minimum documentation to the extent that such documents are included in the fields searched

Electronic data base consulted during the international search (name of data base and, where practicable, search terms used)

CNTXT; CNABS; CNKI; WPABS; DWPI; ENTXT: 优奈柯恩, 姿态, 位姿, 估计, 校正, 确定, 计算, 陀螺, 磁力计, 磁传感器, 加速度, 惯性导航单元, 惯导, 卡尔曼, 先验, 后验, 状态, 协方差, 更新, MEMS, IMU, INS, pos+, attitude, estimat+, calibrat+, correct+, gyro+, magnetometer+, accelerometer+, kalman+

### C. DOCUMENTS CONSIDERED TO BE RELEVANT

| Category* | Citation of document, with indication, where appropriate, of the relevant passages | Relevant to claim No. |
|---|---|---|
| X | CN 113155129 A (PEKING UNIVERSITY) 23 July 2021 (2021-07-23)<br>description, paragraphs 0004-0177 | 1-15 |
| X | CN 113670314 A (SOUTHWEST UNIVERSITY OF SCIENCE AND TECHNOLOGY) 19 November 2021 (2021-11-19)<br>description, paragraphs 0013-0208 | 1-15 |
| X | CN 109001787 A (PEKING UNIVERSITY SHENZHEN GRADUATE SCHOOL) 14 December 2018 (2018-12-14)<br>description, paragraphs 0006-0151 | 1-15 |
| A | JP 2013061309 A (YAMAHA CORP.) 04 April 2013 (2013-04-04)<br>entire document | 1-15 |
| A | CN 107272718 A (GOERTEK TECHNOLOGY CO., LTD.) 20 October 2017 (2017-10-20)<br>entire document | 1-15 |
| A | CN 108534772 A (XINING TAILI HUOLI INTELLIGENT TECHNOLOGY CO., LTD.) 14 September 2018 (2018-09-14)<br>entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 December 2023** | **13 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132153**

| Patent document cited in search report | | | Publication date (day/month/year) | Patent family member(s) | Publication date (day/month/year) |
|---|---|---|---|---|---|
| CN | 113155129 | A | 23 July 2021 | None | |
| CN | 113670314 | A | 19 November 2021 | None | |
| CN | 109001787 | A | 14 December 2018 | None | |
| JP | 2013061309 | A | 04 April 2013 | None | |
| CN | 107272718 | A | 20 October 2017 | None | |
| CN | 108534772 | A | 14 September 2018 | None | |

Form PCT/ISA/210 (patent family annex) (July 2022)

**REFERENCES CITED IN THE DESCRIPTION**

**Patent documents cited in the description**

- CN 202211447184